# EUROPEAN PATENT APPLICATION

(11) **EP 4 206 400 A1**
(43) Date of publication of application: **05.07.2023**
(21) Application number: 20838325.7
(22) Date of filing: 26.08.2020
(51) Int. Cl.: D07B 1/06, B60C 9/00

(54) **STEEL CORD AND TIRE**

(71) Applicant: Sumitomo Electric Tochigi Co., Ltd., Utsunomiya-shi, Tochigi 321-3231 (JP)
(72) Inventor: MATSUOKA, Akifumi, Utsunomiya-shi, Tochigi 3213231 (JP); YOSHIDA, Shinichi, Utsunomiya-shi, Tochigi 3213231 (JP)
(74) Representative: Boult Wade Tennant LLP
(86) International application number: PCT/JP2020/032249
(87) International publication number: WO 2022/044176

(57) **Abstract**

A steel cord includes one or more core filaments, and outer sheath filaments provided so as to surround the one or more core filaments. The one or more core filaments and the outer sheath filaments have an identical wire diameter and an identical twist pitch. At least one of the one or more core filaments is a waved filament having a bent portion and a non-bent portion along a longitudinal direction.

## Description

### Technical Field

The present disclosure relates to a steel cord and a tire.

### Background Art

A metallic cord including a core wire and outer wires arranged so as to surround the core wire is disclosed in Patent Document 1. In the metallic cord disclosed in Patent Document 1, the core wire and the outer wire have the same diameter, the same twist direction, and the same twist pitch. The core wire is not preformed and at least some outer wires are preformed.

### [Related Art Documents]

### [Patent Documents]

[Patent Document 1] U.S. Patent Publication No. 2011/0099967

### Summary of the Invention

A steel cord according to the present disclosure includes one or more core filaments, and outer sheath filaments provided so as to surround the one or more core filaments. The one or more core filaments and the outer sheath filaments have an identical wire diameter and an identical twist pitch. At least one of the one or more core filaments is a waved filament having a bent portion and a non-bent portion along a longitudinal direction.

### Brief Description of the Drawings

FIG. 1 is a cross-sectional view of a steel cord according to one aspect of the present disclosure in a plane perpendicular to a longitudinal direction;
FIG. 2 is a cross-sectional view of a steel cord, in a plane perpendicular to a longitudinal direction, having the same configuration of FIG. 1 except that the core filaments do not include a waved filament;
FIG. 3 is a cross-sectional view of a steel cord having a 3/8 structure according to one aspect of the present disclosure in a plane perpendicular to a longitudinal direction;
FIG. 4 is a side view of the steel cord according to one aspect of the present disclosure;
FIG. 5 is an explanatory drawing of a waved filament in which a bent portion and a non-bent portion are repeatedly formed;
FIG. 6 is an explanatory drawing of a method of manufacturing the waved filament in which the bent portion and the non-bent portion are repeatedly formed;
FIG. 7 is a cross-sectional view of a tire according to one aspect of the present disclosure; and
FIG. 8 is a drawing schematically illustrating a belt layer.

### Embodiment for Carrying Out the Invention

### [Problem to Be Solved by the Present Disclosure]

As disclosed in Patent Document 1, a steel cord including a core wire and outer wires arranged so as to surround the core wire and having a configuration in which the twist pitch of the core wire is equal to the twist pitch of the outer wire is conventionally known. The steel cord in which the twist pitch of the core wire is equal to the twist pitch of the outer wire enables good productivity because the core wire and the outer wire can be twisted at the same time.

However, from the viewpoint of increasing the durability of a tire, a steel cord having a high degree of rubber penetration is desired to prevent water from entering a rubber of a tire.

Thus, it is an object of the present disclosure to provide a steel cord having a high degree of rubber penetration.

### [Effect of the Present Disclosure]

According to the present disclosure, a steel cord having a high degree of rubber penetration can be provided.

### [Description of Embodiments of the Present Disclosure]

First, embodiments of the present disclosure will be described by listing. In the following description, the same or corresponding elements are referenced by the same reference numerals and the same descriptions will not be repeated for the same or corresponding elements.
(1) A steel cord according to one aspect of the present disclosure includes core filaments and outer sheath filaments arranged so as to surround the core filaments. The one or more core filaments and the outer sheath filaments have an identical wire diameter and an identical twist pitch. At least one of the core filaments is a waved filament having a bent portion and a non-bent portion along a longitudinal direction.

The wire diameter of the core filament is configured equal to the wire diameter of the outer sheath filament, so that the same filaments can be used as the core filament and the outer sheath filament. This can reduce the number of types of filaments prepared, reduce the cost, and increase the productivity, when the steel cord is manufactured.

If the twist pitch of the core filament is equal to the twist pitch of the outer sheath filament, the core filament and the outer sheath filament can be twisted together to manufacture the steel cord. This can increase the productivity of the steel cord.

However, if the core filament and the outer sheath filament have an identical wire diameter and an identical twist pitch, a two-layer twisted steel cord that is obtained has a problem of a low degree of rubber penetration.

Thus, in a steel cord according to one aspect of the present disclosure, at least one of the core filaments is a waved filament. As a result, the steel cord according to one aspect of the present disclosure can increase the distance between the outer sheath filaments and increase the degree of rubber penetration in comparison with a case where the core filaments do not include a waved filament.

(2) The core filaments include two waved filaments arranged adjacent to each other and the two waved filaments may have different wave pitches.

If the wave pitches of the two adjacent core filaments are different, positions of the bent portions of the two adjacent core filaments in the longitudinal direction can be prevented from being matched without adjusting positions of the two adjacent core filaments in the longitudinal direction. As a result, an area of the core can be sufficiently increased and sufficient spaces between the outer sheath filaments can be formed. The degree of rubber penetration in particular can be increased.

(3) The core filaments include two waved filaments arranged adjacent to each other, and the two waved filaments may have different wave heights.

The heights of the two adjacent waved filaments are configured to be different, so that the area of the core can be increased and sufficient spaces between the outer sheath filaments can be formed, even if positions of the bent portions of the adjacent waved filaments in the longitudinal direction are matched. The degree of rubber penetration in particular can be increased. (4) All the core filaments may be the waved filaments.

All the core filaments included in the steel cord are configured to be the waved filaments, so that the distance between the outer sheath filaments in particular can be increased and the degree of rubber penetration in particular can be increased.

(5) The waved filaments may include portions that form wave shapes in multiple different directions.

As the core filaments of the steel cord, the waved filaments having portions that form wave shapes in multiple different directions are used, so that the distance between the outer sheath filaments can be sufficient and the degree of rubber penetration of the steel cord in particular can be increased, even if the wave height is low. As the core filaments of the steel cord, the waved filaments having portions that form wave shapes in multiple different directions are used, so that the wave height required to achieve a desired degree of rubber penetration can be reduced in comparison with a case in which waved filaments that form wave shapes only in a single direction are used. Thus, the processing amount required when a waved filament is formed can be suppressed and the breaking load of the waved filament can be increased.

(6) The core filament may have a brass plating film containing Cu and Zn on a surface thereof.

Cu indicates copper and Zn indicates zinc.

The brass plating film containing Cu and Zn is provided in the core filament, so that when the steel cord is covered with rubber to form a tire, the adhesive strength between the core filament and the rubber can be increased and the durability of the tire in particular can be increased.

(7) The brass plating film may further contain one or more elements selected from Co, Ni, and Fe.

Co indicates cobalt, Ni indicates nickel, and Fe indicates iron.

By configuring the brass plating film to contain one or more elements selected from Co, Ni, and Fe, the adhesive strength between the core filament and the rubber can be further increased and the durability of the tire can be further increased.

(8) The structure may be a 2/7 structure or a 3/8 structure.

The steel cord is formed as the 2/7 structure or the 3/8 structure, so that the breaking load of the steel cord can be increased because the 2/7 or 3/8 structure is a structure in which the number of the outer sheath filaments is close to an acceptable upper limit relative to the number of core filaments. Additionally, in any of the above-described structures, the outer sheath filaments are densely arranged around the core filaments, and thus the degree of rubber penetration conventionally tends to be reduced. However, according to the steel cord of one aspect of the present disclosure, even if any of the above-described structures is used, the degree of rubber penetration can be increased, and a high effect can be particularly obtained.

(9) A tire including the steel cord described in any of (1) to (8).

Since the steel cord according to one aspect of the present disclosure has improved degree of rubber penetration, the steel cord can be filled with rubber, and water or the like can be prevented from entering. Thus, a tire including such a steel cord can be a durable tire.

Additionally, the steel cord according to one aspect of the present disclosure has a flat shape in a cross-section perpendicular to the longitudinal direction. Since the thickness of a belt layer can be selected so that the steel cord arranged in a single row in the rubber can be embedded, the cross-sectional shape of the steel cord can be flat to reduce the thickness of the steel cord, thereby reducing the thickness of the belt layer. Therefore, by using such a steel cord, the amount of rubber contained in the belt layer can be reduced in comparison with, for example, a case where a circular steel cord having the same cross-sectional area is used. As a result, the weight of the belt layer can be reduced, and the weight of the tire including the belt layer can also be reduced.

### [Details of Embodiment of the Present Disclosure]

Specific examples of a steel cord and a tire according to one embodiment of the present disclosure (which is hereinafter referred to as "the present embodiment") will be described below with reference to the drawings. It should be noted that the present invention is not limited to these examples and is intended to include all modifications in the meaning and within the scope of the claims and equivalents.

### [Steel cord]

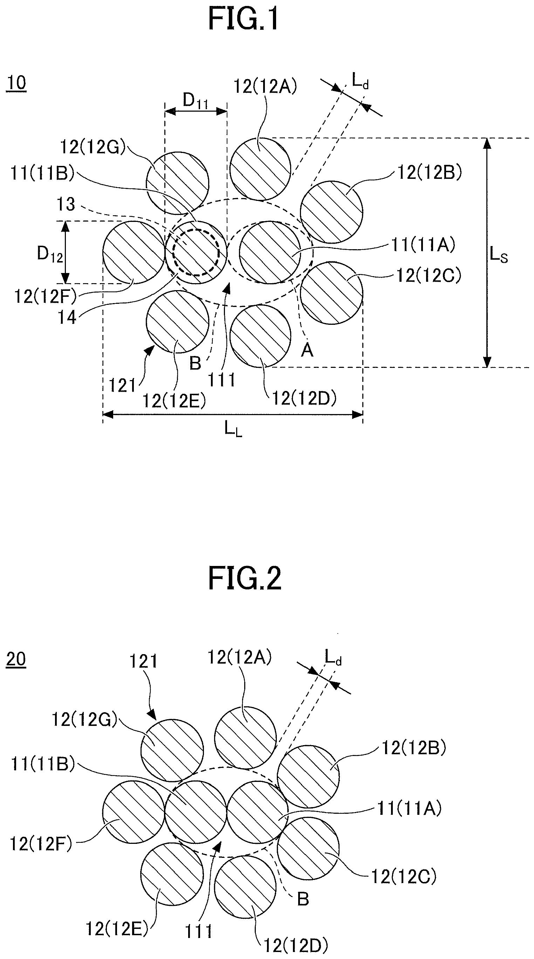

In the following, the steel cord according to the present embodiment will be described with reference to FIGs. 1 to 6.

### (1) Structure of the steel cord

As illustrated in FIG. 1, a steel cord 10 according to the present embodiment may include core filaments 11 and outer sheath filaments 12 arranged to surround the core filaments 11.

That is, the steel cord 10 of the present embodiment has a layer twisted structure including a core 111 including the core filaments 11 and an outer sheath 121 including the outer sheath filaments 12 arranged around an outer periphery of the core 111. Here, the layer twisted structure indicates that the filaments are laminated and are arranged in multiple layers in the cross-section perpendicular to the longitudinal direction of the steel cord. The steel cord according to the present embodiment preferably has a two-layer twisted structure in which each of the core 111 and the outer sheath 121 is one layer as illustrated in FIG. 1.

Hereinafter, when the core filament 11 and the outer sheath filament 12 are not distinguished and collectively referred, the core filament 11 and the outer sheath filament 12 may be simply described as filaments.

In FIG. 1, an example of the 2/7 structure in which two core filaments 11 and seven outer sheath filaments 12 is illustrated, but the present disclosure is not limited to such a configuration. The number of the core filaments 11 and the number of the outer sheath filaments 12 can be selected depending on required characteristics of the steel cord, such as the breaking load.

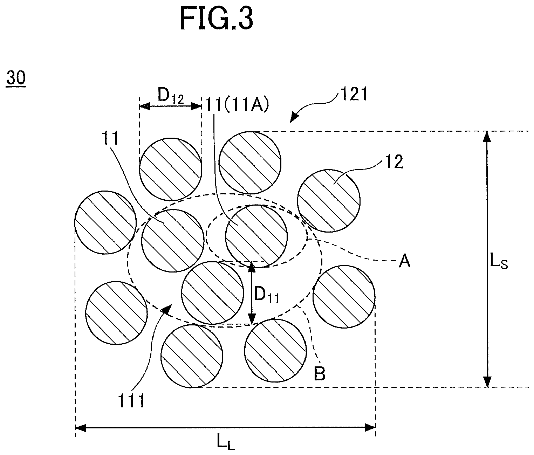

Preferably, the steel cord of the present embodiment is, for example, the steel cord 10 having the 2/7 structure illustrated in FIG. 1 or a steel cord 30 having the 3/8 structure illustrated in FIG. 3.

The N/M structure described above indicates a two-layer twisted structure in which the number of the core filaments 11 is N, the number of the outer sheath filaments 12 is M, and the core filaments 11 and the outer sheath filaments 12 have an identical twist pitch and an identical twist direction. Thus, the 3/8 structure indicates that the number of the core filament 11 is three and the number of the outer sheath filament 12 is eight, as illustrated in FIG. 3.

The steel cord in the present embodiment is formed as the 2/7 structure or the 3/8 structure, so that the breaking load of the steel cord can be increased because the 2/7 structure or the 3/8 structure is a structure in which the number of the outer sheath filaments 12 is close to an acceptable upper limit relative to the number of the core filaments 11. Additionally, in any of the above-described structures, the outer sheath filaments 12 are densely arranged around the core filaments 11, and thus the degree of rubber penetration conventionally tends to be reduced. However, according to the steel cord of the present embodiment, even if any of the above-described structures is used, the degree of rubber penetration can be increased and a high effect in particular can be obtained.

A cross-section perpendicular to the longitudinal direction of the steel cord 10 of the present embodiment may be, for example, a flat shape. The length of the long diameter L_{L} in the cross-section perpendicular to the longitudinal direction of the steel cord 10 of the present embodiment is not particularly limited, but is preferably, for example, 1.43 mm or greater and 1.65 mm or less, and is more preferably 1.45 mm or greater and 1.60 mm or less.

The length of the short diameter Ls in the cross-section perpendicular to the longitudinal direction of the steel cord 10 of the present embodiment is not particularly limited, but is preferably, for example, 1.30 mm or greater and 1.50 mm or less, and is more preferably 1.32 mm or greater and 1.45 mm or less.

The lengths of the long diameter and the short diameter of the steel cord of the present embodiment can be adjusted by pressing the steel cord, for example, along the thickness direction that is, specifically, the direction of the short diameter L_{S}.

### (2) Filaments

### (2-1) Wire diameter

The wire diameter D₁₁ of the core filament 11 included in the steel cord 10 of the present embodiment is preferably equal to the wire diameter D₁₂ of the outer sheath filament 12. The wire diameter D₁₁ of the core filament 11 is configured equal to the wire diameter D₁₂ of the outer sheath filament 12, so that the same filaments can be used as the core filament 11 and the outer sheath filament 12. This can reduce the number of types of filaments prepared, reduce the cost, and increase the productivity, when manufacturing the steel cord.

The wire diameter D₁₁ of the core filament 11 and the wire diameter D₁₂ of the outer sheath filament 12 are not limited, but are preferably, for example, 0.30 mm or greater and 0.42 mm or less, and are more preferably 0.35 mm or greater and 0.42 mm or less. When the wire diameters D₁₁ and D₁₂ are 0.30 mm or greater, the breaking load of the steel cord can be sufficiently increased. Further, the wire diameters D₁₁ and D₁₂ are configured to be 0.42 mm or less, so that when the steel cord including the filaments is used for the tire, shock can be sufficiently absorbed and the riding comfort during driving can be improved.

The wire diameter D₁₁ of the core filament 11 and the wire diameter D₁₂ of the outer sheath filament 12 each have a certain manufacturing tolerance. Then, the wire diameters of the filaments can be considered as the same if they are within the tolerance.

For example, if the wire diameter D₁₁ of the core filament 11 and the wire diameter D₁₂ of the outer sheath filament are in a relationship of 0.92 ≤ D11/D12 ≤ 1.08, the difference can be considered as within the tolerance range. Therefore, when the above-described range is satisfied, the wire diameter D₁₁ of the core filament and the wire diameter D₁₂ of the outer sheath filament may be considered as the same.

### (2-2) Twist pitch of the filament

In addition, the twist pitch of the core filament 11 is preferably equal to the twist pitch of the outer sheath filament 12.

If the twist pitch of the core filament 11 is equal to the twist pitch of the outer sheath filament 12, the core filament 11 and the outer sheath filament 12 can be twisted together to manufacture the steel cord. This can increase the productivity of the steel cord.

The twist pitch indicates the length in which the filament is twisted once. The length herein indicates the length along the central axis of the steel cord.

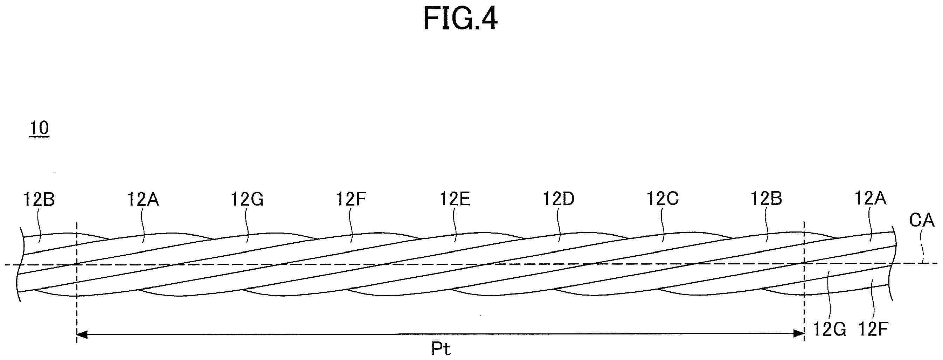

FIG. 4 illustrates a side view of the steel cord 10 illustrated in FIG. 1. As also illustrated in FIG. 1, the steel cord 10 includes seven outer sheath filaments 12A to 12G. Thus, the outer sheath filaments 12A to 12G repeatedly appear on the side of the steel cord 10 in this order.

Then, as illustrated in FIG. 4, on the side of the steel cord 10, the distance between positions of the same outer sheath filament along a central axis CA, that is, for example, the distance between positions of the outer sheath filaments 12A, is a twist pitch Pt of the outer sheath filaments 12.

Here, the twist pitch has been described by using a case of the outer sheath filament 12 as an example, but a case of the twist pitch of the core filament 11 is substantially the same.

In the steel cord of the present embodiment, the twist pitch of the outer sheath filament and the twist pitch of the core filament are not particularly limited. However, for example, the twist pitch of the outer sheath filament and the twist pitch of the core filament are preferably 10 mm or greater and 30 mm or less, and more preferably 15 mm or greater and 25 mm or less.

The twist pitch of the core filament 11 and the twist pitch of the outer sheath filament 12 each also has a certain manufacturing tolerance. Thus, the twist pitches of the filaments can be considered as the same if a difference is within the tolerance.

Here, the twist direction of the core filament 11 is preferably the same as the twist direction of the outer sheath filament 12.

### (2-3) Waved filament

In the core filament 11 and the outer sheath filament 12, the wire diameters and the twist pitches are configured to be the same as described above, so that the productivity of the steel cord can be increased. However, if the wire diameters and the twist pitches of the core filament 11 and the outer sheath filament 12 are the same, the two-layer twisted steel cord that is obtained has a problem of reducing the degree of rubber penetration. From the viewpoint of increasing the durability of the tire, a steel cord having an increased degree of rubber penetration is required to prevent water from entering the rubber of the tire.

Therefore, in the steel cord 10 of the present embodiment, at least one of the core filaments 11 is preferably a waved filament having a bent portion and a non-bent portion along the longitudinal direction.

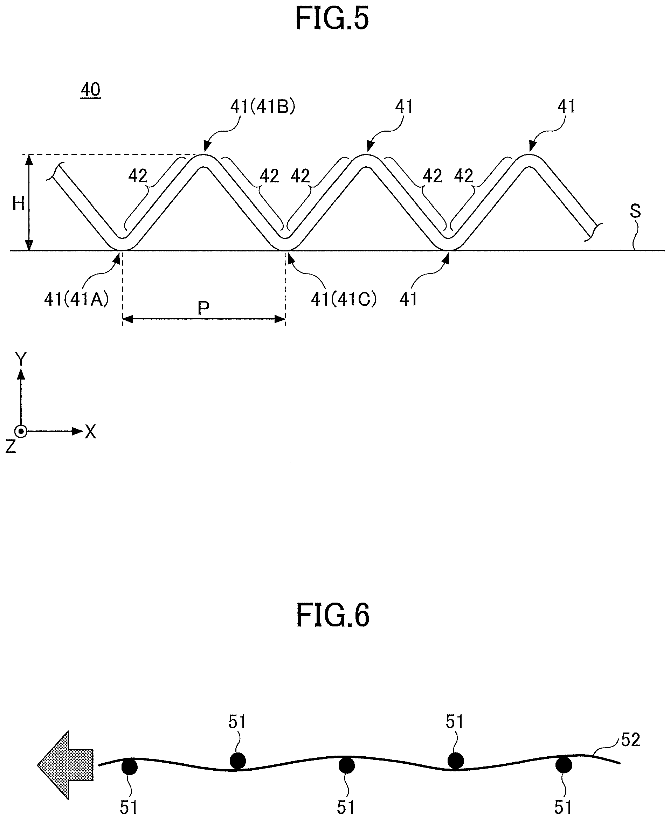

Although the details of the waved filament will be described below, as illustrated in FIG. 5, a waved filament 40 has a repetition of a bent portion 41 and a non-bent portion 42 along the longitudinal direction to form a shape having wave amplitudes. Thus, as illustrated in FIG. 1, if the core filament 11A of the steel cord 10 is a waved filament, when the core filament 11A is viewed in multiple cross-sections perpendicular to the longitudinal direction of the steel cord 10, a position of the core filament 11A is changed in accordance with the cross-section. As a result, the area of a region surrounded by a dotted line A that is occupied by the core filament 11A, which is a waved filament, is increased, and the area of the core 111 surrounded by a dotted line B including the core filament 11A is also increased. Since the area of the core 111 is increased, a distance L_{d} between the outer sheath filaments 12A and 12B arranged so as to surround the core 111 can be increased.

The same applies to the steel cord 30 having the 3/8 structure, illustrated in FIG. 3.

For comparison, FIG. 2 illustrates a cross-sectional view of the steel cord 20 in a plane perpendicular to the longitudinal direction of the steel cord 20 when all the two core filaments 11A and 11B are straight filaments, which are not waved filaments. Comparing the steel cord 10 illustrated in FIG. 1 with the steel cord 20 illustrated in FIG. 2, it can be found that the core 111, surrounded by the dotted line B, of the steel cord 10 has a larger area than that of the steel cord 20. It can also be found that the steel cord 10 illustrated in FIG. 1 has a longer distance L_{d} between the outer sheath filaments 12A and 12B than the steel cord 20 illustrated in FIG. 2.

As described above, at least one of the core filaments 11 is configured to be a waved filament, so that the distance between the outer sheath filaments 12A and 12B can be increased, and the degree of rubber penetration can be increased in comparison with the case where the core filaments 11 do not include a waved filament.

The number of the waved filaments included in the steel cord of the present embodiment is not particularly limited. At least one of the core filaments 11 may be a waved filament as described above. All the core filaments 11 included in the steel cord of the present embodiment may be waved filaments. The waved filaments are used for all the core filaments 11 included in the steel cord of the present embodiment, so that the distance between the outer sheath filaments 12 in particular can be expanded, and the degree of rubber penetration in particular can be increased.

If the core filaments 11 include two waved filaments arranged adjacent to each other, the two waved filaments preferably differ in a wave pitch P described below. That is, in a case where multiple filaments of the core filaments 11 are waved filaments and at least some of the waved filaments are arranged adjacent to each other, the wave pitches P preferably differ between the adjacent waved filaments.

If the wave pitches P of the two adjacent waved filaments are the same, positions of the bent portions of the adjacent waved filaments in the longitudinal direction may be matched unless the positions of the adjacent waved filaments in the longitudinal direction are adjusted. If the positions of the bent portions of the adjacent waved filaments in the longitudinal direction are matched, the effect of increasing the area of the core 111 is reduced and the effect of increasing the degree of rubber penetration might be inhibited.

With respect to the above, if the wave pitches P of the two adjacent waved filaments are different, the positions of the bent portions of the two adjacent waved filaments in the longitudinal direction are prevented from being matched without adjusting the positions of the two adjacent waved filaments in the longitudinal direction. As a result, the area of the core 111 can be sufficiently increased to form sufficient spaces between the outer sheath filaments 12. The degree of rubber penetration in particular can be increased.

The difference between the wave pitches P of the two adjacent waved filaments is not particularly limited, but is preferably 1.5 mm or greater, and is more preferably 1.7 mm or greater. By configuring the difference between the wave pitches P of the adjacent waved filaments to be 1.5 mm or greater, the positions of the bent portions of the adjacent waved filaments in the longitudinal direction can be prevented from being matched without adjusting the positions of the waved filaments in the longitudinal direction while manufacturing the steel cord. Thus, the area of the core 111 in particular can be increased, and the degree of rubber penetration in particular can be increased.

However, since it may be difficult to increase the difference between the wave pitches P of the adjacent waved filaments to be 5 mm or greater, the difference between the wave pitches P of the adjacent waved filaments is preferably 5 mm or less, and is more preferably 4 mm or less.

If the waved filaments include two waved filaments arranged adjacent, the two waved filaments preferably have different wave heights H described below. That is, if the waved filaments are used for multiple core filaments among the core filaments 11 and at least some of the waved filaments are arranged adjacent, the wave heights H preferably differ between the adjacent waved filaments.

A configuration in which the wave heights H of the two adjacent waved filaments are different is used, so that the area of the core 111 can be increased and sufficient spaces can also be formed between the outer sheath filaments, even if the positions of the bent portions of the adjacent waved filaments in the longitudinal direction are matched. The degree of rubber penetration in particular is increased.

The difference between the wave heights H of the adjacent waved filaments is not particularly limited, but is preferably 20% or greater relative to the wire diameter of the waved filament and is more preferably 25% or greater relative to the wire diameter of the waved filament. The difference between the wave heights H of the adjacent waved filaments is configured to be 20% or greater relative to the wire diameter, the area of the core 111 can be increased and the degree of rubber penetration can be increased even if the potions of the bent portions of the adjacent waved filaments in the longitudinal direction are matched.

Additionally, the upper limit of the difference between the wave heights H of the adjacent waved filaments is not particularly limited, but the difference between the wave heights H of the adjacent waved filaments is preferably 150% or less relative to the wire diameter of the waved filament and more preferably 100% or less. If the difference between the wave heights H of the adjacent waved filaments is configured to be 150% or less relative to the wire diameter of the waved filament, the outer diameter of the steel cord can be prevented from being excessively large.

Here, in the steel cord of the present embodiment, a straight filament having no bent portion may be used for the outer sheath filament 12, instead of a waved filament. That is, just one or more core filaments selected from the core filaments 11 may be waved filaments, and the other filaments including the outer sheath filament 12 may be straight filaments.

According to a study of inventors of the present invention, in a case where the waved filaments are used as the core filaments 11, the number of the waved filaments required to achieve a desired degree of rubber penetration can be reduced, in comparison with a case where the waved filaments are used as the outer sheath filaments 12. Thus, the number of the waved filaments required in manufacturing the steel cord can be reduced and the productivity of the steel cord can be increased.

In a case where the waved filaments are used as the core filaments 11, the long diameter L_{L} and the short diameter Ls of the steel cord when the desired degree of rubber penetration is achieved can be reduced in comparison with a case where the waved filaments are used as the outer sheath filaments 12. The steel cord can be applied to, for example, the belt layer of the tire described below, but the thickness of the belt layer can be selected so as to embed the steel cord in the rubber of the belt layer. Specifically, for example, the thickness of the belt layer may be defined as a value obtained by adding a predetermined value to the thickness of the steel cord to embed the steel cord. Thus, by reducing the long diameter L_{L} and the short diameter L_{S} of the steel cord, the thickness of the belt layer can be reduced, thereby reducing the amount of rubber contained in the belt layer. As a result, the weight of the tire including the belt layer can be reduced, and the fuel economy of the vehicle to which the tire is attached can be improved.

Details of the waved filament will be described with reference to FIG. 5 and FIG. 6.

FIG. 5 illustrates an example configuration of the waved filament 40. As described above, the waved filament 40 has the bent portion 41 and the non-bent portion 42 that alternately repeat along the longitudinal direction.

FIG. 5 illustrates an example in which a filament is bent at an angle close to 90 degrees at the bent portion 41, but is not limited to such a form. For example, a filament may be bent at an angle less than 90 degrees or greater than 90 degrees.

The waved filament can be formed by placing multiple preforms 51 and passing a straight filament 52, which is formed to be the waved filament, between the multiple preforms 51 along the direction of the block arrow in the drawing, for example, as illustrated in FIG. 6. The shape of the bent portion, the length of the non-bent portion, and the like can be selected by changing the arrangement, size, and shape of the preforms 51. The preform 51 may have a pin shape (i.e., a cylindrical shape) or a gear shape, for example.

The specific wave shape of the waved filaments is not particularly limited. However, the wave height H of the waved filament is preferably 2000 or greater and 350% or less relative to the wire diameter of the waved filament, and is more preferably 220% or greater and 320% or less.

As illustrated in FIG. 5, the wave height H indicates, when the waved filament 40 is placed on a plane S, a height from the plane S to a bent portion 41B on a side far from the plane S. When the wave height H is evaluated, the waved filament is placed on the plane S so that the directions of the amplitudes formed by the repetition of the bent portion and the non-bent portion become perpendicular to the plane S.

The wave height H is configured to be 2000 or greater relative to the wire diameter of the waved filament, so that sufficient spaces can be formed between the outer sheath filaments and the degree of rubber penetration of the steel cord in particular can be increased when the waved filament is used as the core filament of the steel cord.

The wave height H is configured to be 350% or less relative to the wire diameter of the waved filament, so that the outer diameter of the steel cord can be prevented from being excessively large. Additionally, the wave height H is preferably configured to be 350% or less relative to the wire diameter of the waved filament because the generation of flare that is a state in which a twisted filament is unwound and expanded when the steel cord is cut can be prevented.

In the waved filament, a wave pitch P that is a pitch of repeating the bent portion and the non-bent portion is not particularly limited, but, for example, is preferably 2.0 mm or greater and 30.0 mm or less, and is more preferably 3.0 mm or greater and 15.0 mm or less.

The wave pitch indicates the distance between bent portions having the same shape and indicates the length of the steel cord from a reference bent portion to a bent portion next to a next bent portion of the reference bent portion in the longitudinal direction. Thus, in the example illustrated in FIG. 5, the wave pitch P indicates, for example, the distance from the bent portion 41A to the bent portion 41C, which is a bent portion next to a next bent portion of the bent portion 41A.

The wave pitch P is configured to be 2.0 mm or greater, so that it is easy to form the bent portion and the non-bent portion of the filament, and to control the filament accurately. Additionally, the wave pitch is configured to be 30.0 mm or less, so that the bent portion and the non-bent portion can be manufactured with a relatively simple device, thereby reducing the manufacturing cost.

FIG. 5 illustrates an example of a waved filament that forms wave shapes only in one direction perpendicular to the X-axis, which is the longitudinal direction, that is, specifically only in the Y-axis direction. However, the waved filament included in the steel cord of the present embodiment is not limited to such a form. The waved filament used in the steel cord of the present embodiment may be, for example, a waved filament including portions that form wave shapes along multiple different directions, that is, specifically, portions that form wave shapes in multiple directions in planes perpendicular to the longitudinal direction. The portions that form wave shapes in the multiple directions indicate portions including, for example, a portion that forms wave shapes in the Z-axis direction as well as a portion that forms wave shapes in the Y-axis direction, which are perpendicular to the X-axis, which is the longitudinal direction of the waved filament 40 in FIG. 5.

The waved filament including portions that form wave shapes in multiple different directions is used as the core filament of the steel cord, so that a sufficient distance between the outer sheath filaments 12 can be obtained, thereby particularly increasing the degree of rubber penetration of the steel cord, even if the wave height H is low. Additionally, the waved filament including portions that form wave shapes in multiple different directions are used as the core filament of the steel cord, so that the wave height required to achieve desired degree of rubber penetration can be reduced in comparison with a case of using a waved filament that forms wave shapes only in one direction. Therefore, the processing amount required to form the waved filament can be reduced, thereby increasing the breaking load of the waved filament.

### (2-4) Materials of the filament

Materials of the core filament included in the steel cord of the present embodiment is not particularly limited, but may be, for example, a steel wire. The core filament included in the steel cord of the present embodiment may also have a steel wire 13 and a plating film 14 disposed on the surface of the steel wire 13, for example, as illustrated as the core filament 11B in FIG. 1.

A high carbon steel wire may be preferably used as the steel wire 13.

The plating film 14 is preferably a brass plating film having, for example, copper (Cu) and zinc (Zn) as metal components. The brass plating film may consist of only Cu and Zn, but may also contain a metal component other than Cu and Zn. The brass plating film may further contain, for example, one or more elements selected from cobalt (Co), nickel (Ni), and iron (Fe) as metal components.

Thus, as in the core filament 11B illustrated in FIG. 1, the core filament included in the steel cord of the present embodiment may have the steel wire 13 and the plating film 14 that is a brass plating film containing Cu and Zn disposed on the surface of the steel wire 13. Such a plating film 14 may further contain one or more elements selected from Co, Ni, and Fe. In FIG. 1, the boundary between the steel wire 13 and the plating film 14 is indicated by the dotted line. However, a composition is continuously changed from the surface of the steel wire 13 to the plating film 14, and the boundary between the two may not be clearly distinguished. In FIG. 1, the plating film 14 is illustrated in only one core filament 11B, but all core filaments 11 included in the steel cord 10 may similarly have plating films 14 on the surfaces of the steel wires 13. Similarly, the outer sheath filament 12 may also have the plating film 14 on the surface of the steel wire 13. The same applies to the steel cord 30 of another configuration example illustrated in FIG. 3.

The core filament has the brass plating film containing Cu and Zn, so that when the steel cord is covered with rubber to form a tire, the adhesive strength between the core filament and the rubber can be increased, thereby increasing the durability of the tire. Additionally, the brass plating film further contains one or more elements selected from Co, Ni, and Fe, so that the adhesive strength between the core filament and the rubber can be further increased, thereby further increasing the durability of the tire.

### <Tire>

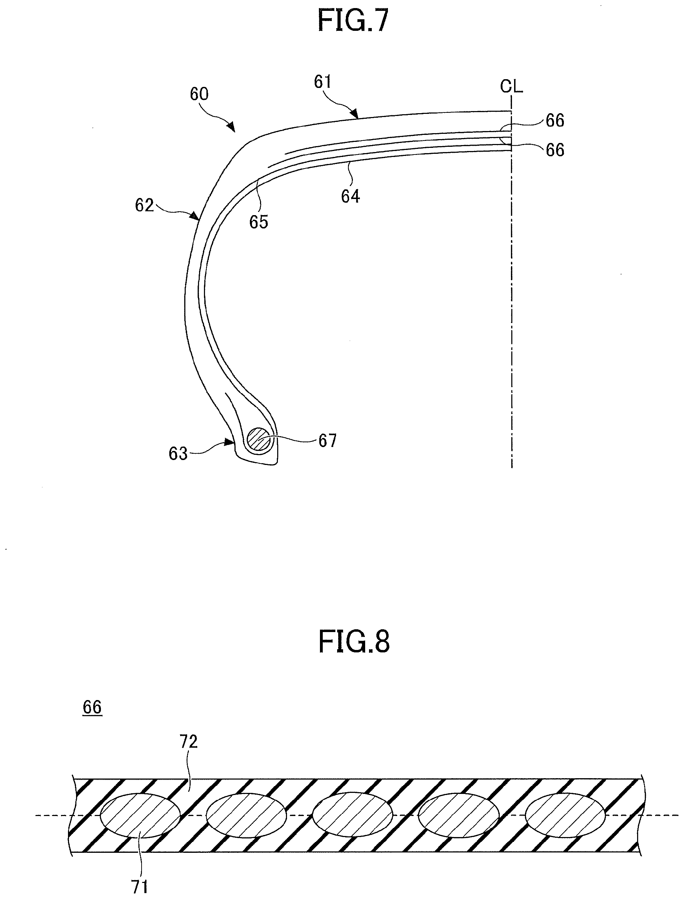

The tire of the present embodiment will be described with reference to FIG. 7 and FIG. 8.

The tire of the present embodiment may include the steel cord described above.

FIG. 7 illustrates a cross-sectional view of a tire 60 according to the present embodiment in a plane perpendicular to the circumferential direction. FIG. 7 illustrates only the left part from the centerline (CL), but the right part from the CL has a similar structure by using the CL as a symmetry axis.

As illustrated in FIG. 7, the tire 60 includes a tread 61, a sidewall 62, and a bead 63.

The tread 61 is a portion that is in contact with a road surface. The bead 63 is provided toward the inside of the tire 60 from the tread 61. The bead 63 is a portion that is in contact with a rim of a wheel of a vehicle. The sidewall 62 connects the tread 61 to the bead 63. When the tread 61 is impacted through the road surface, the sidewall 62 is elastically deformed to absorb the impact.

The tire 60 includes an inner liner 64, a carcass 65, a belt layer 66, and a bead wire 67.

The inner liner 64 is formed of rubber and seals a space between the tire 60 and the wheel.

The carcass 65 forms a backbone of the tire 60. The carcass 65 is formed of an organic fiber, such as polyester, nylon, and rayon, or a steel cord; and rubber.

The bead wire 67 is provided in the bead 63. The bead wire 67 receives a tensile force acting on the carcass.

The belt layers 66 tighten the carcass 65 to increase the rigidity of the tread 61. In the example illustrated in FIG. 7, the tire 60 has two belt layers 66.

FIG. 8 is a drawing schematically illustrating a single belt layer 66. FIG. 8 illustrates a cross-sectional view of the belt layer 66 in a longitudinal direction of the belt layer 66, that is, in a plane perpendicular to the circumferential direction of the tire 60.

As illustrated in FIG. 8, the belt layer 66 includes multiple steel cords 71 and rubber 72. The multiple steel cords 71 are arranged in parallel in a row. As the steel cord 71, the steel cord described above may be used. The rubber 72 covers the steel cords 71, and the periphery of each steel cord 71 is fully covered with the rubber 72. The steel cords 71 are embedded in the rubber 72.

Since the above-described steel cord has an improved degree of the rubber penetration, the steel cord can be filled with the rubber to prevent water or the like from entering the steel cord. Therefore, according to the tire of the present embodiment including the steel cord described above, the durability of the tire can be increased.

Additionally, the steel cord described above has a flat shape in a cross-section perpendicular to the longitudinal direction. Since the thickness of the belt layer can be selected so that the steel cords arranged in a single row can be embedded in the rubber, a shape of the cross-section of the steel cord is configured to be flat and the thickness is reduced, thereby reducing the thickness of the belt layer. Therefore, by using the steel cord described above, the amount of rubber included in the belt layer can be reduced in comparison with, for example, a case where a circular steel cord having the same cross-sectional area is used. As a result, the weight of the belt layer can be reduced, and the weight of the tire including the belt layer can also be reduced.

The embodiments have been described in detail above, but are not limited to any specific embodiment. Various modifications and alterations can be made within the scope of the claims.

### [Examples]

Specific examples will be described below. However, the present invention is not limited to these examples.

### (Evaluation Method)

### (1) Method of evaluating the steel cord

A method of evaluating the steel cords produced in the following experimental examples will be described.

### (1-1) Wire diameter

The wire diameter of the filament was measured using a micrometer.

### (1-2) Outer diameter of the cord

The steel cord to be evaluated was embedded in a transparent resin and a sample was cut so as to expose a plane (i.e., a cross section) perpendicular to the longitudinal direction of the steel cord.

Then, a projector was used to measure a short diameter Ls of the steel cord and the long diameter L_{L} in the cross section.

### (1-3) Twist pitch

The measurement was performed by the tracing method of JIS G 3510 (1992). Specifically, a thin paper that is traceable was placed on the outer periphery of the produced steel cord, and was rubbed with a pencil over the paper to copy a trace of the twist of the outer sheath filament. Then, five twist pitches of the outer sheath filament along the central axis of the steel cord was measured by a ruler from the obtained trace of the twist of the outer sheath filament, and a value obtained by dividing the measured value by 5 was used as the twist pitch of the outer sheath filament.

After untwisting the outer sheath filament and exposing the core filament, the twist pitch of the core filament was also measured in a similar manner. However, since the twist pitch of the outer sheath filament was the same as the twist pitch of the core filament in each of the following examples, only one value is shown as the evaluation result.

### (1-4) Degree of the rubber penetration

First, the produced steel cords were arranged on a tire rubber sheet such that the spaces between the steel cords are equal, that is the distance between the steel cords is twice as long as the long diameter of the steel cord, and the rubber sheet was placed over the steel cords. Thus, a laminate of a rubber sheet having a cuboid shape and a steel cord with a thickness being five times as long as the shorter diameter of the steel cord in total, was prepared. The laminate of the rubber sheet and the steel cord was vulcanized at 160°C for 18 minutes.

After natural cooling, the steel cord was retrieved with a cutter knife from the obtained steel cord and rubber complex.

Then, two adjacent outer sheath filaments were removed from the retrieved steel cord. The degree of rubber penetration was determined as a percentage obtained by calculating a rate of the length of a portion being covered with the rubber in the observation length of 100 mm along the central line of a region exposed by removing the two adjacent outer sheath filaments in the width direction.

As a value of the degree of rubber penetration increases, the degree of rubber penetration indicates improved rubber penetration. The degree of rubber penetration that is 50% or greater indicates being sufficient for practical use.

In the following, a producing condition of the steel cord in each experimental example will be described. Experimental examples 1 to 19 are the embodiments and Experimental examples 20 to 22 are comparative examples.

### [Experimental example 1]

### (Steel cord)

The steel cord was produced by the following procedure.

A copper layer and a zinc layer were formed on the surface of a steel filament matrix by plating. The copper layer was formed using copper pyrophosphate as a plating solution with a current density of 22 A/dm² and a processing time of 14 seconds. The zinc layer was formed using zinc sulfate as a plating solution with a current density of 20 A/dm² and a processing time of 7 seconds.

After plating, heat treatment was performed by heating at 600°C for 9 seconds under the atmosphere, and metal components were diffused to form the plating films.

By performing wire stretching processing on the filament matrix on which the obtained plating films were formed, a filament having a wire diameter of 0.38 mm and having a brass plating film on the surface of the steel wire was obtained.

Then, the obtained filaments having the plating films were twisted by a twisting machine so that the steel cord according to Experimental example 1 having the 2/7 structure illustrated in FIG. 1 was manufactured. As the 2/7 structure has already been described, the description is omitted here. Here, as the core filament 11 and the outer sheath filament 12, filaments having the same wire diameter and having the brass plating films were used, and the twist pitch and the twist direction of the core filament 11 were the same as the twist pitch and the twist direction of the outer sheath filament 12.

When the steel cord of Experimental example 1 described above was produced, one filament among the two core filaments 11 was a waved filament. The waved filament was a filament in which the bent portion and the non-bent portion are repeatedly formed along the longitudinal direction such that the wave height H is 0.95 mm (i.e., 250% of the wire diameter) and the wave pitch P between the bent portion and the non-bent portion is 4.3 mm. The remaining one filament was a straight filament in which the bent portions were not formed. In the following other experimental examples, among the core filaments 11, the filaments that are not the waved filaments are straight filaments in which the bent portions are not formed. Additionally, for all the outer sheath filaments 12, straight filaments in which the bent portions were not formed were used.

In the waved filament used in the present experimental example, wave shapes are formed along one direction, as in the waved filament 40 illustrated in FIG. 5. In Table 1, a waved filament in which wave shapes are formed along one direction as used in the present experimental example and other experimental examples is represented as "two dimensions" and a waved filament having portions that form wave shapes along multiple different directions as used in Experimental example 13 to 15 and 19 is represented as "three dimensions".

The degree of rubber penetration in the steel cord of Experimental example 1 was evaluated. The result is shown in Table 1.

### [Experimental example 2 to Experimental example 8]

The steel cords were produced and evaluated in a manner similar to Experimental example 1 except that the wave pitch P and the wave height H of each of the waved filaments were values shown in Table 1.

In each of the experimental examples, a steel cord having the 2/7 structure was produced, and one of the core filaments 11 was a waved filament.

The evaluation results are shown in Table 1.

### [Experimental examples 9 and 10]

The steel cord was produced and evaluated in a manner similar to Experimental example 1 except that both of the two core filaments were waved filaments and the wave pitch P and the wave height H of each of the waved filaments were values shown in Table 1.

Here, also in these experimental examples, the steel cord having the 2/7 structure was produced.

In Experimental example 9, the wave height H of each of the two waved filaments was 0.95 mm, and the wave pitches were respectively 4.3 mm and 6.2 mm.

In Experimental example 10, the wave height H of each of the two waved filaments was 0.95 mm, and the wave pitches were respectively 4.3 mm and 8.3 mm.

The evaluation results are shown in Table 1.

### [Experimental example 11]

The steel cord was produced and evaluated in a manner similar to Experimental example 1 except that both of the two core filaments were waved filaments and the wave pitch P and the wave height H of each of the waved filaments were values shown in Table 1.

When the filaments were twisted, the filaments were adjusted to produce the steel cord, so that bent positions of the two core filaments are shifted in the longitudinal direction.

The steel cord having the 2/7 structure was produced also in the present experimental example.

The wave height H of each of the two waved filaments was 0.95 mm, and the wave pitch was each 4.3 mm.

### [Experimental example 12]

The steel cord was produced and evaluated in a manner similar to Experimental example 1 except that both of the two core filaments were waved filaments and the wave pitch P and the wave height H of each of the waved filaments were values shown in Table 1.

Here, also in these experimental examples, the steel cord having the 2/7 structure was produced.

The wave heights H of the two waved filaments were respectively 0.95 mm and 1.06 mm, and the wave pitch was each 4.3 mm.

The evaluation results are shown in Table 1.

### [Experimental example 13]

The waved filament having portions that form wave shapes along multiple different directions was used as the waved filament, and the wave pitch P and the wave height H were the values shown in Table 1. Except the above points, the steel cord was produced and evaluated in a manner similar to Experimental example 1.

The steel cord having the 2/7 structure was produced and one of the core filaments 11 was a waved filament.

The evaluation results are shown in Table 1.

### [Experimental examples 14 and 15]

Both of the two core filaments were waved filaments. The waved filaments having portions that form wave shapes along multiple different directions were used as the two waved filaments, and the wave pitch P and the wave height H were the values shown in Table 1. Except the above points, the steel cords were produced and evaluated in a manner similar to Experimental example 1.

Here, also in these experimental examples, the steel cord having the 2/7 structure was produced.

In Example 14, for each of the two waved filaments, the wave height H was 1.06 mm and the wave pitch P was 4.3 mm.

In Experimental example 15, for each of the two waved filaments, the wave height H was 0.85 mm and the wave pitch P was 4.3 mm.

The evaluation results are shown in Table 1.

### [Experimental example 16]

The steel cord having the 3/8 structure illustrated in FIG. 3 was produced using the filament having the brass plating film produced in Experimental example 1. As the 3/8 structure has already been described, the description is omitted here. Here, as the core filament 11 and the outer sheath filament 12, the same wire diameter is used, and a filament having the brass plating film is used. The twist pitch and the twist direction of the core filament 11 are the same as the twist pitch and the twist direction of the outer sheath filament 12.

In producing the steel cord, one of the three filaments of the core filaments 11 was a waved filament. The waved filament was a filament in which a bent portion and a non-bent portion were repeatedly formed along the longitudinal direction, such that the wave height H is 0.95 mm (i.e., 250% of the wire diameter) and the wave pitch P between the bent portion and the non-bent portion is 4.3 mm. Straight filaments in which bent portions were not formed were used as the remaining two filaments. Also, the outer sheath filaments 12 were straight filaments in which bent portions were not formed.

The degree of rubber penetration of the produced steel cord was evaluated. The result is shown in Table 1.

### [Experimental examples 17 and 18]

In Experimental example 17, two filaments of the three core filaments 11 were waved filaments.

In Experimental example 18, all of the three core filaments 11 were waved filaments, that is, the three filaments were waved filaments.

In Experimental example 17, for each of the two waved filaments, the wave height H was 0.95 mm, and the wave pitches were respectively 4.3 mm and 6.2 mm.

In Experimental example 18, for each of the three waved filaments, the wave height H was 0.95 mm, and the wave pitches were respectively 4.3 mm, 6.2 mm, and 8.1 mm.

Except the above points, the steel cord was produced and evaluated in a manner similar to Experimental example 16.

Here, in each of these experimental examples, a steel cord having the 3/8 structure was produced.

The evaluation results are shown in Table 1.

### [Experimental example 19]

One core filament among the three core filaments 11 was a waved filament. As such a waved filament, a waved filament including portions that form wave shapes along multiple different directions was used, and the wave pitch P and the wave height H were the values shown in Table 1. Specifically, the wave height H was 0.95 mm and the wave pitch P was 4.3 mm.

Except the above points, the steel cord was produced and evaluated in a manner similar to Experimental example 16.

Here, also in this experimental example, the steel cord having the 3/8 structure was produced.

The evaluation result is shown in Table 1.

### [Experimental example 20]

Four outer sheath filaments were waved filaments, and the wave pitch P and wave height H of the waved filaments were set as the values shown in Table 1. The waved filaments and the straight filaments in which the bent portions were not formed are alternately disposed along the circumferential direction of the core 111. Additionally, the core filaments 11 were each a straight filament in which the bent portions were not formed. Except the above points, the steel cord was produced and evaluated in a manner similar to Experimental example 1.

Here, in this experimental example, the steel cord having the 2/7 structure was produced.

The evaluation result is shown in Table 1.

### [Experimental example 21]

As the outer sheath filaments and the core filaments, the straight filaments in which the bent portions were not formed were used. That is, the steel cord 20 having the structure illustrated in FIG. 2 was produced without using the waved filaments. Except the above points, the steel cord was produced and evaluated in a manner similar to Experimental example 1.

Here, also in this experimental example, the steel cord having the 2/7 structure was produced.

### [Experimental example 22]

As the outer sheath filaments and the core filaments, straight filaments in which the bent portions were not formed were used. Except the above points, the steel cord was produced and evaluated in a manner similar to Experimental example 16.

Here, in this experimental example, the steel cord having the 3/8 structure was produced.

The evaluation result is shown in Table 1.

**[Table 1]**

| | WIRE DIAMETER (mm) | STRUCTURE | TWIST PITCH Pt (mm) | WAVED FILAMENT | | | OUTER DIAMETER OF CORD | | WAVE PITCH P (mm) | WAVE HEIGHT H (mm) | DEGREE OF RUBBER PENETRATION % |
|---|---|---|---|---|---|---|---|---|---|---|---|
| | | | | WAVE TYPE | NUMBER OF FILAMENTS | | SHORT DIAMETER L_{S} (mm) | LONG DIAMETER L_{L} (mm) | | | |
| | | | | | CORE | OUTER | | | | | |
| EXPERIMENTAL EXAMPLE 1 | 0.38 | 2/7 STRUCTURE | 22.0 | TWO DIMENSIONS | 1 | 0 | 1.33 | 1.46 | 4.3 | 0.95 | 52 |
| EXPERIMENTAL EXAMPLE 2 | 0.38 | 2/7 STRUCTURE | 22.0 | TWO DIMENSIONS | 1 | 0 | 1.33 | 1.46 | 6.2 | 0.95 | 54 |
| EXPERIMENTAL EXAMPLE 3 | 0.38 | 2/7 STRUCTURE | 22.0 | TWO DIMENSIONS | 1 | 0 | 1.34 | 1.47 | 4.3 | 1.03 | 63 |
| EXPERIMENTAL EXAMPLE 4 | 0.38 | 2/7 STRUCTURE | 22.0 | TWO DIMENSIONS | 1 | 0 | 1.34 | 1.49 | 4.3 | 1.06 | 73 |
| EXPERIMENTAL EXAMPLE 5 | 0.38 | 2/7 STRUCTURE | 22.0 | TWO DIMENSIONS | 1 | 0 | 1.36 | 1.50 | 6.2 | 1.10 | 78 |
| EXPERIMENTAL EXAMPLE 6 | 0.38 | 2/7 STRUCTURE | 22.0 | TWO DIMENSIONS | 1 | 0 | 1.34 | 1.49 | 6.2 | 1.06 | 74 |
| EXPERIMENTAL EXAMPLE 7 | 0.38 | 2/7 STRUCTURE | 22.0 | TWO DIMENSIONS | 1 | 0 | 1.38 | 1.52 | 6.2 | 1.14 | 77 |
| EXPERIMENTAL EXAMPLE 8 | 0.38 | 2/7 STRUCTURE | 22.0 | TWO DIMENSIONS | 1 | 0 | 1.38 | 1.52 | 3.1 | 1.14 | 58 |
| EXPERIMENTAL EXAMPLE 9 | 0.38 | 2/7 STRUCTURE | 22.0 | TWO DIMENSIONS | 2 | 0 | 1.35 | 1.51 | 4.3/6.2 | 0.95 | 66 |
| EXPERIMENTAL EXAMPLE 10 | 0.38 | 2/7 STRUCTURE | 22.0 | TWO DIMENSIONS | 2 | 0 | 1.37 | 1.51 | 4.3/8.3 | 0.95 | 72 |
| EXPERIMENTAL EXAMPLE 11 | 0.38 | 2/7 STRUCTURE | 22.0 | TWO DIMENSIONS | 2 | 0 | 1.37 | 1.51 | 4.3/4.3 | 0.95 | 55 |
| EXPERIMENTAL EXAMPLE 12 | 0.38 | 2/7 STRUCTURE | 22.0 | TWO DIMENSIONS | 2 | 0 | 1.38 | 1.57 | 4.3/4.3 | 0.95/1.06 | 70 |
| EXPERIMENTAL EXAMPLE 13 | 0.38 | 2/7 STRUCTURE | 22.0 | THREE DI MENS IONS | 1 | 0 | 1.35 | 1.49 | 4.3 | 1.06 | 75 |
| EXPERIMENTAL EXAMPLE 14 | 0.38 | 2/7 STRUCTURE | 22.0 | THREE DI MENS IONS | 2 | 0 | 1.39 | 1.52 | 4.3/4.3 | 1.06 | 74 |
| EXPERIMENTAL EXAMPLE 15 | 0.38 | 2/7 STRUCTURE | 22.0 | THREE DI MENS IONS | 2 | 0 | 1.39 | 1.52 | 4.3/4.3 | 0.85 | 64 |
| EXPERIMENTAL EXAMPLE 16 | 0.38 | 3/8 STRUCTURE | 18.0 | TWO DIMENSIONS | 1 | 0 | 1.38 | 1.51 | 4.3 | 0.95 | 55 |
| EXPERIMENTAL EXAMPLE 17 | 0.38 | 3/8 STRUCTURE | 18.0 | TWO DIMENSIONS | 2 | 0 | 1.40 | 1.54 | 4.3/6.2 | 0.95 | 72 |
| EXPERIMENTAL EXAMPLE 18 | 0.38 | 3/8 STRUCTURE | 18.0 | TWO DIMENSIONS | 3 | 0 | 1.42 | 1.56 | 4.3/6.2/8.1 | 0.95 | 74 |
| EXPERIMENTAL EXAMPLE 19 | 0.38 | 3/8 STRUCTURE | 18.0 | THREE DI MENS IONS | 1 | 0 | 1.38 | 1.52 | 4.3 | 0.95 | 70 |
| EXPERIMENTAL EXAMPLE 20 | 0.38 | 2/7 STRUCTURE | 22.0 | TWO DIMENSIONS | 0 | 4 | 1.42 | 1.58 | 4.3 | 1.03 | 73 |
| EXPERIMENTAL EXAMPLE 21 | 0.38 | 2/7 STRUCTURE | 22.0 | - | 0 | 0 | 1.37 | 1.53 | - | - | 40 |
| EXPERIMENTAL EXAMPLE 22 | 0.38 | 3/8 STRUCTURE | 18.0 | - | 0 | 0 | 1.40 | 1.52 | - | - | 45 |

According to the results shown in Table 1, in Experminental example 1 to Experimental example 19 in which at least one of the core filaments was the waved filament, the rubber penetration was 50% or greater, and it was found that a steel cord having an improved degree of rubber penetration was obtained.

In the steel cord of Experimental example 20, since the four outer filaments are configured as the waved filaments, the degree of rubber penetration can be 50% or greater. However, comparing Experimental example 20 with Experimental example 4, although the degrees of rubber penetration are the same, it is necessary to increase the number of waved filaments to four in Experimental example 20, and it can be found that the productivity is inferior to the productivity of Experimental example 4.

It is also found that the steel cord of Experimental example 20 has a larger outer diameter than the steel cords of the other experimental examples.

It is found that since the steel cords of Experimental example 21 and Experimental example 22 do not include the waved filaments, the degrees of rubber penetration rate are respectively 40% and 45%, which are remarkably low.

### Description of the Reference Numerals

10, 20, 30 steel cord
11, 11A, and 11B core filament
111 Core
12, 12A to 12G outer sheath filament
121 outer sheath
13 steel wire
14 plating film
A, B dotted line
L_{L} long diameter
L_{S} short diameter
D₁₁, D₁₂ wire diameter
L_{d} distance
Pt twist pitch
CA central axis
40 waved filament
41, 41A, 41B, 41C bent portion
42 non-bent portion
H wave height
P wave pitch
S plane
51 preform
52 filament
60 tire
61 tread
62 sidewall
63 bead
64 inner liner
65 carcass
66 belt layer
67 bead wire
71 steel cord
72 rubber
CL center Line

## Claims

1. A steel cord comprising:
one or more core filaments; and
outer sheath filaments provided so as to surround the one or more core filaments,
wherein the one or more core filaments and the outer sheath filaments have an identical wire diameter and an identical twist pitch, and
wherein at least one of the one or more core filaments is a waved filament having a bent portion and a non-bent portion along a longitudinal direction.

2. The steel cord as claimed in claim 1,
wherein the core filaments include two said waved filaments provided adjacent to each other, and
wherein wave pitches of the two waved filaments are different from each other.

3. The steel cord as claimed in claim 1 or 2,
wherein the core filaments include two said waved filaments provided adjacent to each other, and
wherein wave heights of the two waved filaments are different from each other.

4. The steel cord as claimed in any one of claims 1 to 3, wherein all the core filaments are said waved filaments.

5. The steel cord as claimed in any one of claims 1 to 4, wherein the waved filament has portions that form wave shapes along a plurality of different directions.

6. The steel cord as claimed in any one of claims 1 to 5, wherein each of the one or more core filaments has a brass plating film containing Cu and Zn on a surface thereof.

7. The steel cord as claimed in claim 6, wherein the brass plating film further contains one or more elements selected from Co, Ni, and Fe.

8. The steel cord as claimed in any one of claims 1 to 7, wherein the steel cord has a 2/7 structure or a 3/8 structure.

9. A tire comprising the steel cord as claimed in any one of claims 1 to 8.
